# EUROPEAN PATENT APPLICATION

(11) **EP 2 311 777 A1**
(43) Date of publication of application: **20.04.2011**
(21) Application number: 10013572.2
(22) Date of filing: 12.10.2010
(51) Int. Cl.: C02F 1/28

(54) **Water purification device**

(30) Priority: 14.10.2009 JP 2009237217
(71) Applicant: Panasonic Electric Works Co., Ltd., Kadoma-shi Osaka (JP)
(72) Inventor: Kodama, Makoto, Kadoma-shi Osaka (JP); Iwasaki, Takeshi, Kadoma-shi Osaka (JP); Ezaki, Yusuhiko, Kadoma-shi Osaka (JP); Kitazono, Ryo, Kadoma-shi Osaka (JP)
(74) Representative: Samson & Partner

(57) **Abstract**

A water purification device (1) includes a purifier body (10) and a purification unit arranged within the purifier body. The purifier body includes a raw water compartment for storing raw water and a purified water compartment for storing purified water purified by the purification unit. The water purification device (1) can be placed in position with a bottom wall (24) of the purifier body facing downwards. The purifier body further includes a placement portion provided in other area thereof than the bottom wall (24) so that the water purification device can be placed in position with the placement portion facing downwards.

## Description

### Field of the Invention

The present invention relates to a water purification device.

### Background of the Invention

Conventionally, there is known a so-called pot-type water purification device that includes a raw water storage portion arranged at the upper side, a purified water storage portion arranged at the lower side and a purification cartridge interposed between the a raw water storage portion and the purified water storage portion (see, e.g., Japanese Patent Application Publication No. 2004-230335).

In the water purification device disclosed in Japanese Patent Application Publication No. 2004-230335, the raw water stored in the raw water storage portion is purified as it passes through the purification cartridge under the gravity. The purified water obtained by purifying the raw water with the purification cartridge is allowed to flow down toward the purified water storage portion and is stored in the purified water storage portion.

The pot-type water purification device can be preserved in a refrigerator or the like with the purified water stored in the purified water storage portion.

Inasmuch as the conventional water purification device of this type is put into the side pocket or the vegetable storage compartment of a refrigerator with the bottom wall thereof facing downwards, there is a likelihood that the water purification device cannot be put into the refrigerator depending on the kind of the refrigerator.

### Summary of the Invention

In view of the above, the present invention provides a water purification device capable of enhancing the degree of freedom in selecting the preservation places thereof.

In accordance with a first embodiment of the present invention, there is provided a water purification device, including a purifier body and a purification unit arranged within the purifier body, the purifier body including a raw water compartment for storing raw water and a purified water compartment for storing purified water purified by the purification unit, the water purification device capable of being placed in position with a bottom wall of the purifier body facing downwards, wherein the purifier body further includes a placement portion provided in other area thereof than the bottom wall so that the water purification device can be placed in position with the placement portion facing downwards.

With such configuration, the placement portion is provided in other area than the bottom wall of the purifier body so that the water purification device can be placed in position with the placement portion facing downwards. Thus, it is possible to broaden the selectivity of preservation places when preserving the water purification device in a refrigerator or the like. In other words, it is possible to enhance the degree of freedom in selecting the preservation places of the water purification device.

The placement portion may include a planar placement surface.

With such configuration, the placement surface of the placement portion is formed into a planar shape. This makes it possible to restrain the water purification device from rocking when it is placed in position with the placement portion facing downwards.

The purifier body may have a water feeding inlet through which to feed the raw water into the raw water compartment and a water pouring outlet through which to pour the purified water toward the outside, and the water purification device may further include a lid for closing the water feeding inlet and the water pouring outlet.

With such configuration, the water purification device includes the lid for closing the water feeding inlet through which to feed the raw water into the raw water compartment and the water pouring outlet through which to pour the purified water toward the outside. This makes it possible to restrain the water contained within the purifier body from leaking to the outside when the water purification device is placed in position with the placement portion facing downwards.

The purifier body may further include an inner wall for partitioning the raw water compartment and the purified water compartment, and the water purification device may further include a first sealing portion provided in the lid for releasably sealing the communication between the water pouring outlet and the purified water compartment and a second sealing portion provided between the inner wall and the lid for releasably sealing a gap between the inner wall and the lid, the communication between the water pouring outlet and the purified water compartment being sealed by the first sealing portion and the gap between the inner wall and the lid being sealed by the second sealing portion when the lid closes the water feeding inlet and the water pouring outlet.

With such configuration, the communication between the water pouring outlet and the purified water compartment is sealed by the first sealing portion and the gap between the inner wall and the lid is sealed by the second sealing portion when the lid closes the water feeding inlet and the water pouring outlet. This makes it possible to restrain the raw water and the purified water from being mixed within the purifier body when the water purification device is placed in position with the placement portion facing downwards. If the lid is closed after purification of the raw water, the pressures in the raw water compartment and the purified water compartment are kept substantially equal to each other. This makes it possible to restrain the purified water from flowing back into the raw water compartment.

The lid may be threadedly coupled to the purifier body, the sealing provided by the first sealing portion being first released and the sealing offered by the second sealing portion being released subsequently when the lid is rotated in an opening direction

With such configuration, the lid is threadedly coupled to the purifier body. This assists in preventing the lid from being removed from the purifier body. In addition, the sealing provided by the first sealing portion is first released and the sealing offered by the second sealing portion is released subsequently when the lid is rotated in the opening direction. Accordingly, if the lid is kept in the state in which the sealing provided by the first sealing portion is released but the sealing offered by the second sealing portion is not released, it is possible to pour the purified water from the water pouring outlet while restraining the raw water from being mixed with the purified water. In other words, it becomes possible to discharge the purified water without having to remove the lid from the purifier body.

The inner wall of the purifier body may have a first communication hole for bringing the raw water compartment and the purified water compartment into communication with each other.

With such configuration, the first communication hole for bringing the raw water compartment and the purified water compartment into communication with each other is formed in the inner wall of the purifier body partitioning the raw water compartment and the purified water compartment. When the raw water is fed into the raw water compartment, the first communication hole serves to keep the pressures within the raw water compartment and the purified water compartment substantially equal. This makes it possible to positively restrain the flow rate of the purified water from being reduced when the water feeding inlet and the water pouring outlet are closed by the lid. As a result, it becomes possible to perform water purification in a state the water feeding inlet and the water pouring outlet are closed by the lid. This eliminates the need to close the lid later, thereby making it possible to improve the work efficiency. Moreover, it is possible to positively prevent the dirt (floating materials) present in the ambient air from entering the purifier body. This assists in prolonging the lifespan of the purification unit.

The first communication hole may be provided to lie above the water level of the raw water compartment when the water purification device is placed in position with the placement portion facing downwards in a state that the raw water compartment stores the raw water up to the upper limit of the permissible storage volume of the raw water compartment.

With such configuration, the first communication hole is provided to lie above the water level of the raw water compartment when the water purification device is placed in position with the placement portion facing downwards in a state that the raw water compartment stores the raw water up to the upper limit of the permissible storage volume of the raw water compartment. This makes it possible to restrain the raw water stored within the raw water compartment from flowing into the purified water compartment through the first communication hole when the water purification device is placed in position after water purification with the placement portion facing downwards.

The lid may have a second communication hole for bringing the raw water compartment into communication with the outside.

With such configuration, the second communication hole for bringing the raw water compartment into communication with the outside is provided in the lid so that the air can be drawn into the raw water compartment from the outside. This makes it possible to positively restrain the flow rate of the purified water from being reduced when the raw water is fed into the raw water compartment. In other words, it is possible to positively restrain the flow rate of the purified water from being reduced when the water feeding inlet and the water pouring outlet are closed by the lid. Thus, the water purification can be performed in a state that the water feeding inlet and the water pouring outlet are closed by the lid. This eliminates the need to close the lid later, thereby making it possible to improve the work efficiency. Moreover, it is possible to positively prevent the dirt (floating materials) present in the ambient air from entering the purifier body. This assists in prolonging the lifespan of the purification unit.

The second communication hole may be provided to lie above the water level of the raw water compartment when the water purification device is placed in position with the placement portion facing downwards in a state that the raw water compartment stores the raw water up to the upper limit of the permissible storage volume of the raw water compartment.

With such configuration, the second communication hole is provided to lie above the water level of the raw water compartment when the water purification device is placed in position with the placement portion facing downwards in a state that the raw water compartment stores the raw water up to the upper limit of the permissible storage volume of the raw water compartment. This makes it possible to restrain the raw water contained in the raw water compartment from leaking to the outside when the water purification device is placed in position with the placement portion facing downwards.

The purification unit may have a discharge hole through which to discharge the purified water into the purified water compartment, the discharge hole being arranged to lie above the water level of the purified water compartment when the water purification device is placed in position with the placement portion facing downwards in a state that the purified water compartment stores the same quantity of purified water as the upper limit of the permissible storage volume of the raw water compartment.

With such configuration, the discharge hole of the purification unit is arranged to lie above the water level of the purified water compartment when the water purification device is placed in position with the placement portion facing downwards in a state that the purified water compartment stores the same quantity of purified water as the upper limit of the permissible storage volume of the raw water compartment. This makes it possible to restrain the raw water and the purified water from being mixed with each other in the purification unit when the water purification device is placed in position with the placement portion facing downwards.

The purifier body may include an external vessel for defining the purified water compartment and an internal vessel for defining the raw water compartment, the internal vessel being removably attached to the external vessel.

With such configuration, the purifier body is provided with the external vessel for defining the purified water compartment and the internal vessel for defining the raw water compartment, the internal vessel being removably attached to the external vessel. This makes it possible to cleanse the purifier body with ease.

The external vessel and the internal vessel may be respectively provided with engagement portions engaging with each other to restrain relative rotational movement of the internal vessel with respect to the external vessel.

With such configuration, the external vessel and the internal vessel are respectively provided with the engagement portions engaging with each other to restrain relative rotational movement of the internal vessel with respect to the external vessel. This makes it possible to restrain the internal vessel from rotating together with the lid when the lid is rotated for removal. Accordingly, it is possible to easily perform the opening and closing of the lid.

The purifier body may have a third communication hole through which the purified water compartment communicates with the outside in a state that the first sealing portion interrupts communication with the outside but releases the sealing between the water pouring outlet and the purified water compartment.

With such configuration, the purifier body has the third communication hole through which the purified water compartment communicates with the outside in a state that the first sealing portion interrupts communication with the outside but releases the sealing between the water pouring outlet and the purified water compartment. Thanks to this feature, the air can be easily drawn from the outside through the third communication hole during the course of pouring the purified water. This makes it possible to maintain a stable water discharge state.

The lid may include an extension portion lying within the contour of the purifier body in a plan view when the water feeding inlet and the water pouring outlet are closed by the lid but protruding outwards beyond the contour of the purifier body in a plan view when the lid is rotated in the opening direction.

With such configuration, the lid is provided with the extension portion lying within the contour of the purifier body in a plan view when the water feeding inlet and the water pouring outlet are closed by the lid but protruding outwards beyond the contour of the purifier body in a plan view when the lid is rotated in the opening direction. This enables a user to clearly figure out the positional relationship available when the water feeding inlet and the water pouring outlet are not closed by the lid. Accordingly, the user is prevented from placing the water purification device in position with the placement portion facing downwards in a state that the water feeding inlet and the water pouring outlet are not closed by the lid.

### Brief Description of the Drawings

The objects and features of the present invention will become apparent from the following description of embodiments, given in conjunction with the accompanying drawings, in which:
Fig. 1 is a perspective view showing a water purification device in accordance with a first embodiment of the present invention;
Fig. 2 is a perspective view showing the water purification device of the first embodiment placed in position with the placement portion thereof facing downwards;
Fig. 3 is a section view showing the water purification device of the first embodiment placed in position with the bottom wall thereof facing downwards;
Fig. 4 is a section view showing the water purification device of the first embodiment placed in position with the placement portion thereof facing downwards;
Fig. 5 is a side view showing the lid of the water purification device of the first embodiment;
Fig. 6A is an enlarged section view showing the sealing state of a pouring portion, a raw water compartment and a purified water compartment in the water purification device of the first embodiment with the lid kept in a closed state, and Fig. 6B is an enlarged section view similar to Fig. 6A with the lid kept in a half-open state;
Fig. 7 is a section view showing the upper portion of the water purification device of the first embodiment with the lid thereof kept half-open;
Fig. 8 is a section view taken along line VIII-VIII in Fig. 7;
Fig. 9 is a plan view showing the water purification device of the first embodiment with the lid thereof kept closed;
Fig. 10 is a plan view showing the water purification device of the first embodiment with the lid thereof kept half-open;
Fig. 11 is a section view showing a water purification device in accordance with a second embodiment of the present invention, in which view the water purification device is placed in position with the bottom wall thereof facing downwards;
Fig. 12 is a section view showing the water purification device of the second embodiment placed in position with the placement portion thereof facing downwards;
Fig. 13 is an enlarged section view showing the pouring portion of the water purification device of the second embodiment with the lid thereof kept closed;
Fig. 14 is a section view showing a water purification device in accordance with a third embodiment of the present invention, in which view the water purification device is placed in position with the bottom wall thereof facing downwards;
Fig. 15 is a section view showing the water purification device of the third embodiment placed in position with the placement portion thereof facing downwards;
Fig. 16 is a plan view showing a water purification device in accordance with a fourth embodiment of the present invention, with the lid thereof kept closed; and
Fig. 17 is a plan view showing the water purification device of the fourth embodiment with the lid thereof kept half-open.

### Detailed Description of the Preferred Embodiments

Embodiments of the present invention will now be described in detail with reference to the accompanying drawings which form a part hereof. Hereinafter, a water purifier will be illustrated as an example of a water purification device. Some of the components included in the following embodiments are the same. Therefore, the same components will be designated by common reference symbols with no duplicate description made thereon. In the following description, the direction in which the pouring portion of a purifier body protrudes will be referred to as "front" or "front side".

### (First Embodiment)

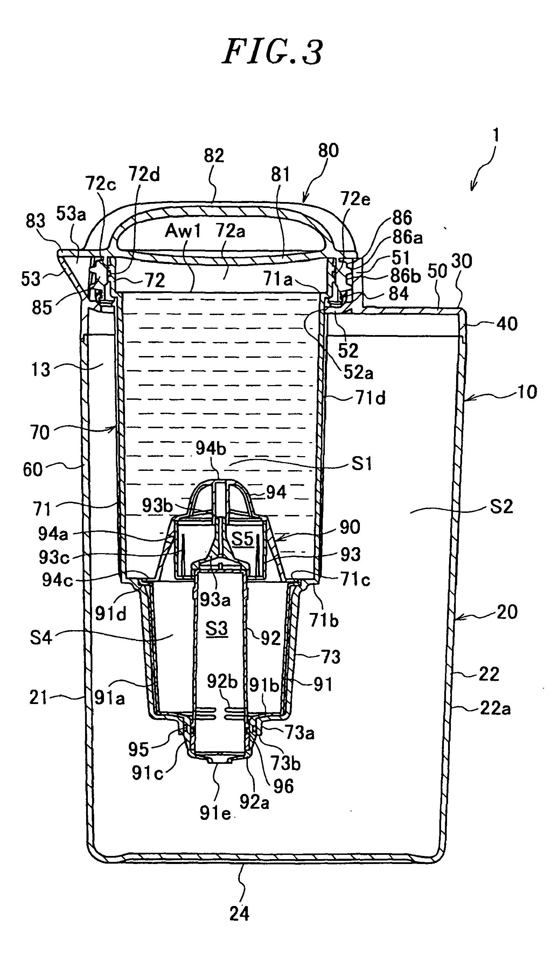

The water purifier (water purification device) 1 of the present embodiment is formed of a pot-type water purifier. As shown in Fig. 3, the water purifier 1 includes a purifier body 10 defining a raw water compartment S1 for receiving and temporarily storing raw water such as tap water or the like and a purified water compartment S2 for storing purified water resulting from purification of the raw water in a purification cartridge (purification unit) 90. The water purifier 1 further includes a purification cartridge 90 mounted to the bottom portion of the inner wall (the below-mentioned internal vessel 70 in the present embodiment) partitioning the raw water compartment S1 and the purified water compartment S2 and a lid 80 for closing a water feeding inlet 72a through which to feed the raw water into the raw water compartment S1 and a water pouring outlet 53a through which to pour the purified water toward the outside.

The water purifier 1 is configured so that it can be placed in position with the bottom wall of the purifier body 10 (the bottom wall 24 of an external vessel 20 in the present embodiment) facing downwards. If the raw water is fed into the raw water compartment S1 in the state that the water purifier 1 is placed in position with the bottom wall of the purifier body 10 facing downwards, the raw water stored in the raw water compartment S1 flows down under the gravity toward the purified water compartment S2 through the purification cartridge 90 and is stored in the purified water compartment S2. That is to say, the water purifier 1 of the present embodiment has such a configuration that the raw water is purified in the purification cartridge 90.

In the present embodiment, the purified water stored in the purified water compartment S2 can be drained from the water pouring outlet 53a through a passage 13 by inclining the water purifier 1 so that the water pouring outlet 53a can face downwards (namely, by inclining the water purifier 1 counterclockwise in Fig. 3).

The passage 13 is formed to extend upwards from the purified water compartment S2 and serves as a pouring path when the purified water is poured.

The purifier body 10 includes a closed-bottom tubular external vessel 20 with an opening 52a formed at the upper end thereof and a substantially tubular internal vessel 70 inserted into the opening 52a from above the external vessel 20 and removably attached to the external vessel 20. The internal vessel 70 has a water feeding inlet 72a formed at the upper end thereof to feed the raw water therethrough and an opening 73b formed in the bottom wall thereof (in the tail end wall 73a of a lower reduced-diameter portion 73 in the present embodiment).

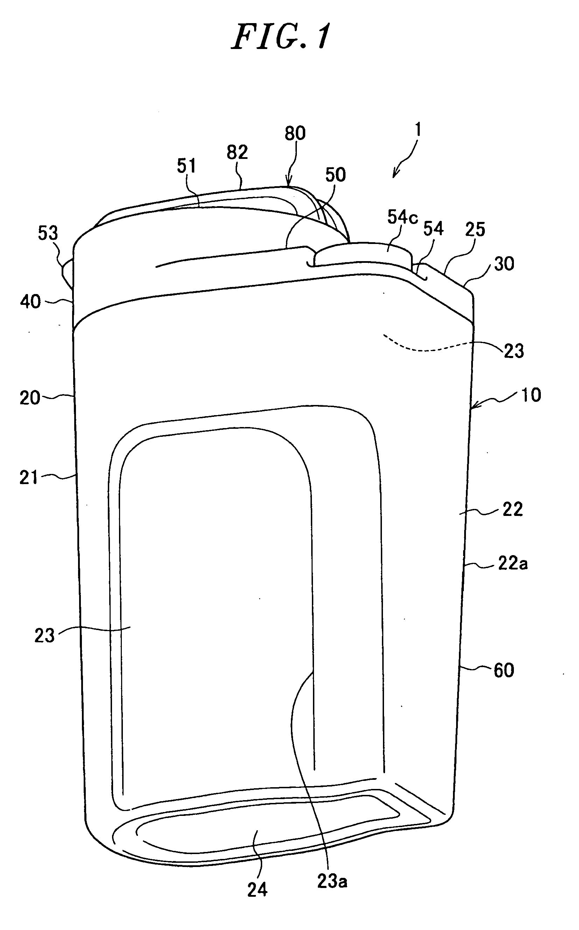

As shown in Fig. 1, the external vessel 20 includes a side wall, a bottom wall 24 and a top wall 25. The side wall includes a front side wall portion 21 of curved shape bulging and protruding frontwards, a rear side wall portion 22 of substantially planar shape, and left and right side wall portions 23. Thus, the external vessel 20 is formed into a substantially box-like shape by the side wall, the bottom wall 24 and the top wall 25.

In the present embodiment, the left and right side wall portions 23 include recess portions 23a formed by depressing the side wall portions 23 toward the interior of the external vessel 20. This enables a user to grip the external vessel 20 with ease.

The external vessel 20 includes a substantially tubular closed-bottom lower case 60 with an open top end and an upper case 30 with an open bottom end. The opening 52a mentioned above is formed in the upper case 30. The external vessel 20 is formed by combining the lower case 60 and the upper case 30 together.

More specifically, the lower case 60 and the upper case 30 are fluid-tightly fixed to each other by bonding the inner circumference of the bottom end portion of the upper case 30 to the outer circumference of the top end portion of the lower case 60 through the use of ultrasonic bonding or other bonding methods.

As shown in Fig. 3, the upper case 30 includes a top wall 50 and a side wall 40 coupled to the upper end of the lower case 60. An attachment portion 51 for attachment of the lid 80 protrudes upwards from the top wall 50.

The attachment portion 51 is erected upwards from the top wall 50 in a substantially tubular shape. The attachment portion 51 has an inner circumferential surface 51a on which a female thread portion (not shown) is formed.

As shown in Fig. 3, a substantially horizontally extending inner rib 52 is formed on the lower inner circumference of the attachment portion 51. An opening 52a into which to insert the internal vessel 70 is formed on the inner circumference of the inner rib 52.

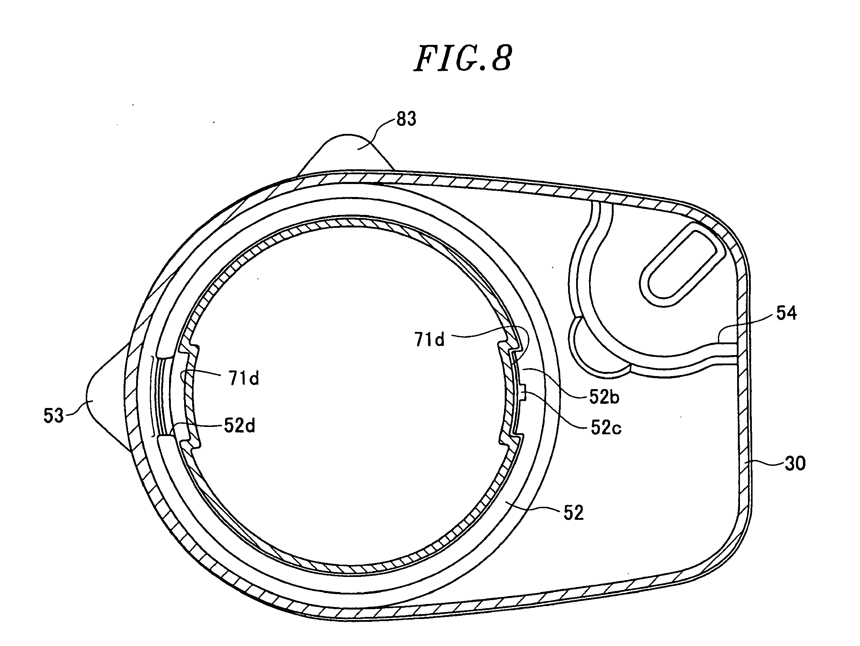

As shown in Fig. 8, a protrusion portion (or an engagement portion) 52b for positioning the internal vessel 70 is formed in the rear portion of the inner rib 52. An air hole (or a third communication hole) 52c is formed in the protrusion portion 52b.

A cutout portion 52d is formed in the front portion of the inner rib 52 so that the passage 13 and the water pouring outlet 53a can communicate with each other through the cutout portion 52d when the internal vessel 70 is inserted into the external vessel 20.

A pouring portion 53 whose width gets gradually smaller frontwards protrudes from the front portion of the top wall 50. The pouring portion 53 has an upper opening serving as the water pouring outlet 53a.

As shown in Fig. 1, a recess portion 54 for attachment of an indicator is formed in the rear portion of the top wall 50. A calendar scale 54c as the indicator is rotatably arranged in the recess portion 54.

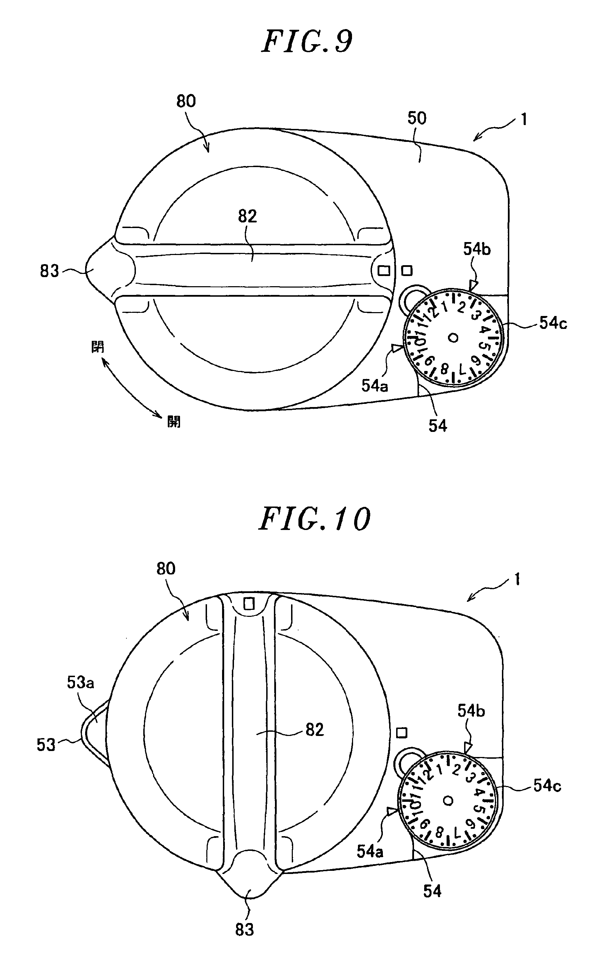

In the present embodiment, the calendar scale 54c has a substantially cylindrical shape as can be seen in Figs. 9 and 10. Numerals 1 through 12 (indicating the months) are written on the surface of the calendar scale 54c.

An arrow 54a indicative of the installation time of the purification cartridge 90 and an arrow 54b indicative of the replacement time of the purification cartridge 90 are formed on the surface of the rear portion of the top wall 50.

In the present embodiment, there is illustrated an instance in which the purification cartridge 90 has a life span of about four months 9 (see Figs. 9 and 10). If a new purification cartridge 90 is mounted in October, the calendar scale 54c is turned so that the arrow 54a can indicate the numeral 10 of the calendar scale 54c as illustrated in Fig. 9. As a result of this setting of the calendar scale 54c, the arrow 54b indicates the numeral 2 of the calendar scale 54c. By merely seeing the calendar scale 54c, the user can readily confirm that the next replacement time of the purification cartridge 90 replaced this time is February of the next year.

The internal vessel 70 has a substantially tubular shape with a top opening. The interior of the internal vessel 70 serves as the raw water compartment S1 while the top opening serves as the water feeding inlet 72a through which to feed the raw water. The internal vessel 70 has a depth substantially equal to one half of the depth of the external vessel 20. The internal vessel 70 is fitted to the upper half part of the external vessel 20 with little gap left in the portion excluding the passage 13, thereby forming the raw water compartment S1 within the internal vessel 70.

In the present embodiment, as shown in Fig. 3, upper and lower step portions 71a and 71b are formed in the upper and lower portions of the circumferential wall, thereby defining a side wall portion 71, an upper increased-diameter portion 72 and a lower reduced-diameter portion 73.

In the present embodiment, each of the side wall portion 71, the upper increased-diameter portion 72 and the lower reduced-diameter portion 73 has a tapering shape so that the diameter thereof can become smaller downwards.

Inwardly-depressed recess portions (or engagement portions) 71d are formed on the outer circumference of the side wall 71. The recess portions 71d extend axially (or vertically) along the side wall portion 71. In the present embodiment, as shown in Fig. 8, the recess portions 71d are formed in two mutually-opposing positions. When the internal vessel 70 is attached to the external vessel 20, the protrusion portion 52b of the inner rib 52 engages with one of the recess portions 71d to restrain the internal vessel 70 from making relative rotational movement with respect to the external vessel 20.

In other words, the recess portions 71d of the internal vessel 70 and the protrusion portion 52b of the external vessel 20 are equivalent to engagement portions that engage with each other to restrain the internal vessel 70 from making relative rotational movement with respect to the external vessel 20.

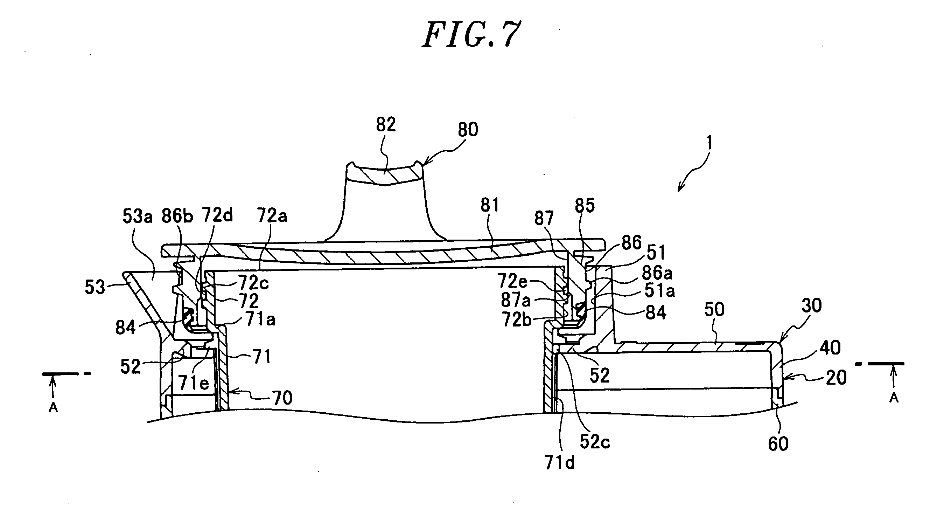

As shown in Fig. 7, a rib 71e is formed on the upper outer circumference of the side wall portion 71. The rib 71e is positioned on the inner rib 52 so that the internal vessel 70 can be attached to the external vessel 20.

The upper increased-diameter portion 72 includes an outer circumferential surface 72b and two protrusion portions 72c formed on the outer circumferential surface 72b to extend in a substantially horizontal direction. The two protrusion portions 72c define a groove 72d therebetween. An O-ring (or a second sealing portion) 72e is inserted into the groove 72d.

The lower reduced-diameter portion 73 is downwardly depressed into a substantially cylindrical shape. The purification cartridge 90 having a substantially cylindrical shape is fitted into the lower reduced-diameter portion 73 from above (see Fig. 3). The lower reduced-diameter portion 73 includes the tail end wall 73a having the opening 73b formed therethrough.

In the present embodiment, the lid 80 is of a thread coupling type. If the lid 80 is removed, the water feeding inlet 72a gets open so that the raw water such as tap water or the like can be fed into the raw water compartment S1. At this time, the passage 13 defined between the external vessel 20 and the internal vessel 70 and the water pouring outlet 53a are also opened.

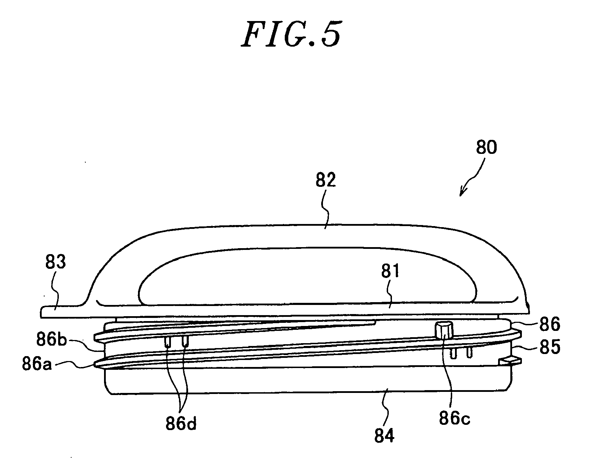

As shown in Fig. 5, the lid 80 includes a lid body portion 81 for closing the water feeding inlet 72a, a handle 82 provided in the lid body portion 81 to enable a user to hold the lid 80 and a flange portion 83 for closing the water pouring outlet 53a.

A downwardly-opened attachment barrel 85 of substantially cylindrical shape protrudes from the lid body portion 81. A male thread portion 86a threadedly engaging with the female thread portion formed on the inner circumferential surface 51a of the attachment portion 51 is formed on an outer circumference 86 of the attachment barrel 85.

In the present embodiment, one lug 86c and two protrusion portions 86d are formed in the thread valley 86b between the thread ridges of the male thread portion 86a (see Fig. 5). The positional relationship of the lid 80 and the purifier body 10 is designed to ensure that, when the lid 80 is in a fully closed position as shown in Fig. 9 or in a half-open position as illustrated in Fig. 10, the lug 86c of the male thread portion 86a can be caught between the two protrusion portions of the female thread portion of the attachment portion 51 while the lug of the female thread portion of the attachment portion 51 can be caught between the two protrusion portions 86d of the male thread portion 86a. This helps restrain the lid 80 from making relative rotational movement with respect to the purifier body 10 when the lid 80 is in a fully closed state or in a half-open state. As the lid 80 is rotated into or out of the fully closed state or the half-open state, the lug goes over one of the protrusion portions. This creates a clicking sense and enables a user to easily confirm that the lid 80 is in the fully closed state or in the half-open state.

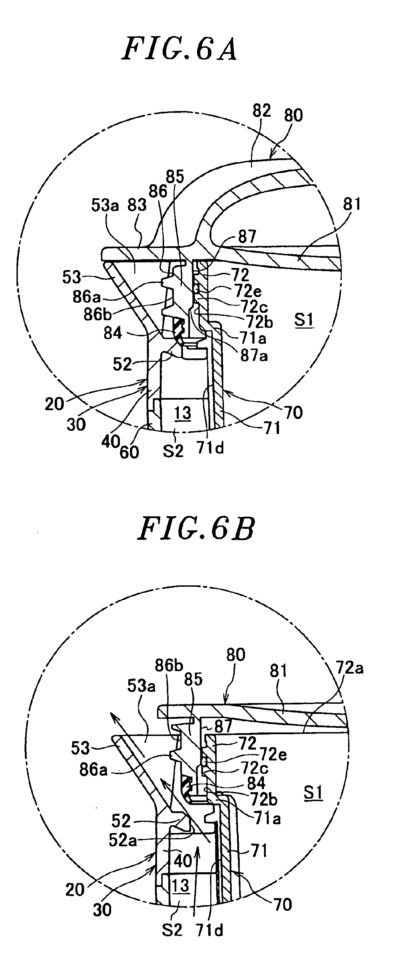

As shown in Fig. 5, a sealing portion (or a first sealing portion) 84 making contact with the inner rib 52 when the lid 80 is the fully closed state, is formed in the lower end portion of the attachment barrel 85 of the lid body portion 81 to extend over the full circumference of the attachment barrel 85. As shown in Fig. 6A, when the lid 80 is in the fully closed state, the communication between the passage 13 and the water pouring outlet 53a is interrupted by the sealing portion 84. Since the sealing portion 84 is provided in the lid 80, the sealing portion 84 is moved up together with the lid 80 out of contact with the inner rib 52 (see Fig. 6B) if the lid 80 is rotated in an opening direction (counterclockwise in Fig. 9) with respect to the purifier body 10. That is to say, the sealing portion 84 is configured to permit or interrupt communication between the passage 13 and the water pouring outlet 53a.

In the present embodiment, if lid 80 is gradually closed by threadedly coupling the male thread portion 86a of the lid 80 to the female thread portion of the attachment portion 51, the gap existing between the outer circumferential surface of the upper increased-diameter portion 72 and the inner circumferential surface 87 of the attachment barrel 85 is sealed by the O-ring 72e.

More specifically, as shown in Fig. 7, the attachment barrel 85 and the upper increased-diameter portion 72 are formed so that the inner diameter of the attachment barrel 85 can be substantially equal to the outer diameter of the protrusion portions 72c of the upper increased-diameter portion 72. Furthermore, a step portion 87a is formed on the inner circumferential surface 87 of the attachment barrel 85 so that the lower extension of the inner circumferential surface 87 can have an increased inner diameter. As a consequence, a gap is created between the lower extension of the inner circumferential surface 87 and the O-ring 72e at the initial closing stage of the lid 80. If the lid 80 is gradually closed, the inner circumferential surface 87 of the attachment barrel 85 comes into contact with the O-ring 72e, thereby sealing the gap created between the outer circumferential surface of the upper increased-diameter portion 72 and the inner circumferential surface 87 of the attachment barrel 85.

With the water purifier 1 of the present embodiment, when the lid 80 keeps closed the water feeding inlet 72a and the water pouring outlet 53a, the communication between the water pouring outlet 53a and the purified water compartment S2 is interrupted by the sealing portion 84 and the gap created between the internal vessel 70 and the lid 80 is sealed by the O-ring 72e (see Fig. 6A).

If the lid 80 is rotated in the opening direction, the sealing provided by the sealing portion 84 is first released (see Fig. 6B) and the sealing offered by the O-ring 72e is released subsequently.

The sealing timing of the gap created between the outer circumferential surface of the upper increased-diameter portion 72 and the inner circumferential surface 87 of the attachment barrel 85 (namely, the closing degree of the lid 80 for occurrence of sealing) can be altered by properly changing the formation position of the step portion 87a (i.e., the vertical position of the step portion 87a on the inner circumferential surface of the attachment barrel 85).

In the present embodiment, if the water pouring outlet 53a is closed by the flange portion 83, the flange portion 83 lies within the contour of the purifier body 10 in a plan view (see Fig. 9). If the lid 80 is rotated in the opening direction, the flange portion 83 protrudes outwards beyond the contour of the purifier body 10 in a plan view (see Fig. 10). This enables a user to easily confirm the fully closed state of the lid 80 by merely observing the current position of the flange portion 83.

Referring to Fig. 3, the purification cartridge 90 includes an upstream adsorption chamber S4 within which the raw water is purified by the adsorbing action of an internally-filled adsorbent (not shown) and a downstream filtering chamber S3 within which the water passing through the adsorption chamber S4 is further purified by the filtering action of an internally-filled filtering material (not shown). In the present embodiment, the purification cartridge 90 further includes a mineral addition chamber S5 within which the mineral components of an internally-filled mineral agent (not shown) are added to the water.

In the present embodiment, the filtering chamber S3 and the adsorption chamber S4 are formed by filling a filtering material such as a hollow fiber membrane or the like into a substantially cylindrical filtering canister 92 opened at its upper and lower ends, fitting the lower end portion 92a of the filtering canister 92 into the tail end wall 91c extending downwards from the bottom wall 91b of a substantially tubular closed-bottom adsorption canister 91 opened at its upper end, and filling an adsorbent such as an active charcoal or the like into between the circumferential wall of the filtering canister 92 and the circumferential wall of the adsorption canister 91.

A discharge hole 91e vertically spaced apart from the lower end opening of the filtering canister 92 fitted to the tail end wall 91c is formed at the central area of the bottom portion of the tail end wall 91c.

An O-ring 95 is fitted to the outer circumferential surface of the tail end wall 91c. The O-ring 95 keeps the tail end wall 73a and the tail end wall 91c in close contact with each other. In addition, an O-ring 96 is fitted to the outer circumferential surface of the lower end portion 92a of the filtering canister 92. The O-ring 96 keeps the lower end portion 92a of the filtering canister 92 and the tail end wall 91c in close contact with each other.

A plurality of communication holes 92b for bringing the filtering chamber S3 and the adsorption chamber S4 into communication with each other is formed in the circumferential wall of the filtering canister 92.

The mineral addition chamber S5 is formed by fitting and locking the upper end portion of the filtering canister 92 into the upwardly-depressed concave end portion 93a provided at the central area of the bottom wall of a tubular closed-bottom open-top mineral canister 93, filling a granular mineral agent such as a calcium additive or the like into the mineral canister 93, capping a bottom-open cap-shaped upper cover 94 on the mineral canister 93, and bringing the flange 94c of the upper cover 94 into engagement with the flange 91d of the adsorption canister 91. The purification cartridge 90 is mounted to the tail end wall 73a of the lower reduced-diameter portion 73 by inserting the flange 94c into the annular groove 71c formed in the lower end portion 71b.

A plurality of water guide holes 94a is formed in the circumferential wall of the upper cover 94 lying outside the mineral canister 93 over the full circumference thereof. The raw water is introduced into the purification cartridge 90 through the water guide holes 94a.

An air discharge hole 94b is vertically formed to extend through the top portion of the upper cover 94 lying above the filtering canister 92. An elongate pipe-shaped air discharge path 93b extends upwards from the central area of the bottom wall of the upwardly-depressed concave end portion 93a of the mineral canister 93. The upper end opening of the air discharge path 93b communicates with the air discharge hole 94b of the upper cover 94.

A plurality of slit-shaped mineral elution holes 93c is formed in the circumferential wall of the mineral canister 93. The mineral addition chamber S5, i.e., the internal space of the mineral canister 93, communicates with the adsorption chamber S4 through the mineral elution holes 93c.

In addition to the air discharge holes 94b, a plurality of additional air discharge holes (not shown) is formed in the top portion of the upper cover 94 surrounding the air discharge holes 94b. The air bubbles generated within the mineral addition chamber S5 are discharged to the outside through the additional air discharge holes (not shown).

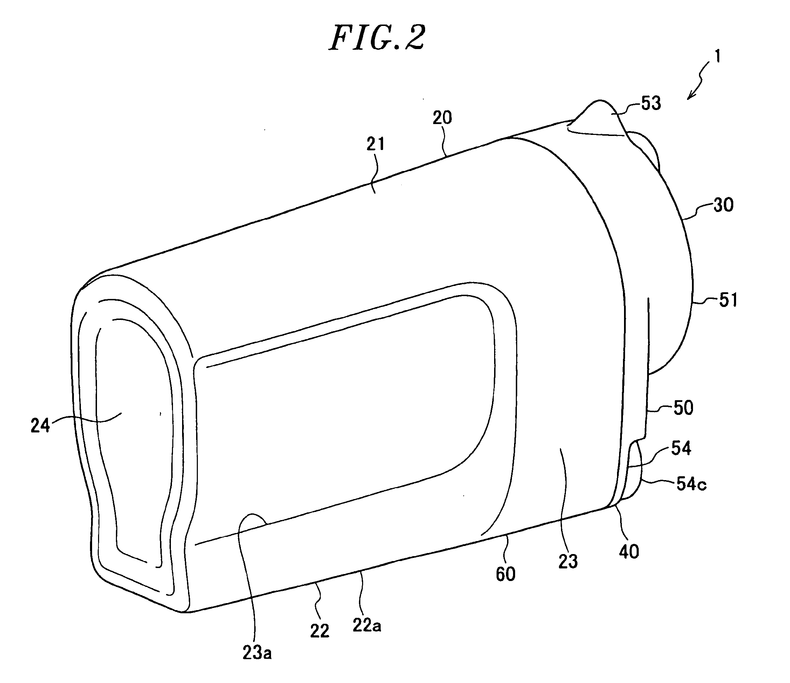

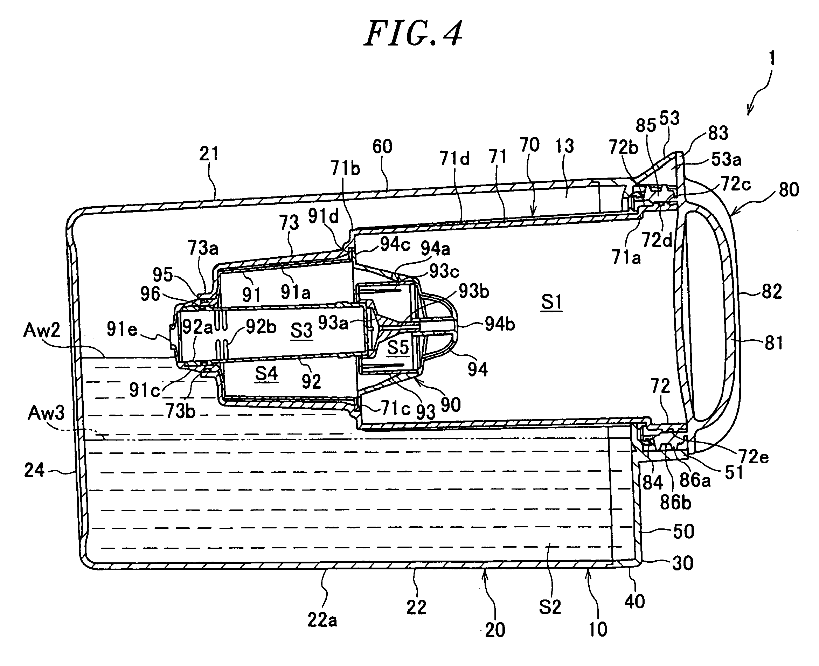

In the present embodiment, a placement portion is provided in the area of the purifier body 10 other than the bottom wall 24 so that the water purifier 1 can be placed in position with the placement portion facing downwards (see Figs. 2 and 4).

More specifically, a planar placement surface 22a is formed in the rear side wall portion 22 of the purifier body 10 so that the water purifier 1 can be placed in position with the placement surface 22a facing downwards.

That is to say, the rear side wall portion 22 is equivalent to the placement portion in the present embodiment.

In the present embodiment, as shown in Fig. 4, the water purifier 1 is designed to ensure that, when the water purifier 1 is placed in position with the placement surface 22a facing downwards in a state that the purified water compartment S2 stores the same quantity of purified water as the upper limit of the permissible storage volume of the raw water compartment S1 (as the volume of the raw water fed to reach the water level Awl shown in Fig. 3), the discharge hole 91e. can be positioned above the water level Aw2 of in the purified water compartment S2.

The purified water compartment S2 is allowed to communicate with the outside in a state that the sealing portion 84 seals up the air hole 52c against communication with the outside but releases the sealing of the water pouring outlet 53a and the purified water compartment S2.

More specifically, the sealing portion 84 is formed in the attachment barrel 85 so that it can make contact with the inner rib 52 at the outer side of the air hole 52c. This makes sure that, when the lid 80 is in a fully closed state, the air hole 52c is sealed by the sealing portion 84 against communication with the outside.

As shown in Fig. 7, when the lid 80 is in a half-open state (namely, when the sealing portion 84 releases the sealing of the water pouring outlet 53a and the purified water compartment S2), a gap communicating with the outside is formed in the thread coupling area between the male thread portion 86a and the female thread portion. This allows the purified water compartment S2 to communicate the outside through the air hole 52c.

A procedure for producing the purified water using the water purifier 1 of this configuration will now be described.

First, the lid 80 is removed from the purifier body 10 by rotating it in the opening direction. Then, the raw water such as tap water or the like is fed into the raw water compartment S1 through the water feeding inlet 72a.

The raw water is stored within the raw water compartment S1 and introduced into the purification cartridge 90 through the water guide holes 94a. Thus, the raw water is filled in the adsorption chamber S4 and the filtering chamber S3 communicating with the adsorption chamber S4 or the mineral addition chamber S5.

The raw water introduced into the purification cartridge 90 is purified as it passes through the purification cartridge 90 under the gravity. The purified water flows down into the purified water compartment S2 from the discharge hole 91e. At this time, water purification is performed by the adsorbing action and the filtering action while the mineral components of the mineral agent are added to the water coming into the mineral addition chamber S5.

Thereafter, the purified water is stored within the purified water compartment S2 as the purification of the raw water by the purification cartridge 90 comes to an end. The water purifier 1 is preserved in a refrigerator or the like with the water feeding inlet 72a and the water pouring outlet 53a covered by the lid 80 (see Fig. 9). At this time, the water purifier 1 may be placed in position with the bottom wall facing downwards or the placement surface 22a of the rear side wall portion 22 facing downwards.

If the water feeding inlet 72a and the water pouring outlet 53a are covered with the lid 80, the inside and outside of the purifier body 10 is sealed so that the raw water compartment S1 and the purified water compartment S2 can be kept under a balanced pressure. This helps restrain occurrence of backflow even when the water purifier 1 is placed in position with the placement surface 22a facing downwards.

In order to take out the purified water from the water purifier 1 for the drinking purpose, the lid 80 is rotated in the opening direction to bring it into the half-open state (see Fig. 10). This releases the sealing between the passage 13 and the water pouring outlet 53a maintained by the sealing portion 84, consequently allowing the passage 13 and the water pouring outlet 53a to communicate with each other. If the water purifier 1 is inclined in this state to have the water pouring outlet 53a face downwards, the purified water stored within the purified water compartment S2 is discharged from the water pouring outlet 53a through the passage 13. As shown in Fig. 6B, when the lid 80 is in the half-open state, the O-ring does not release the sealing of the gap formed between the outer circumferential surface of the upper increased-diameter portion 72 and the inner circumferential surface 87 of the attachment barrel 85. In addition, the purified water compartment S2 is kept in communication with the outside through the air hole 52c. This allows the ambient air to be introduced through the air hole 52c while restraining the raw water stored in the raw water compartment S1 from being mixed with the purified water, which makes it possible to maintain a stable water discharge state.

In the present embodiment, the air hole 52c is formed at the rear side of the water pouring outlet 53a. Thanks to this feature, it is possible to restrain the purified water from infiltrating into the water pouring outlet 53a and forming a water curtain in the course of pouring the purified water. This makes it possible to reliably maintain the stable water discharge state (see Fig. 8).

With the present embodiment described above, the placement portion is provided in the rear side wall portion 22 of the purifier body 10 (namely, in the portion other than the bottom wall 24) so that the water purifier (water purification device) 1 can be placed in position with the rear side wall portion 22 facing downwards. Thanks to this feature, it is possible to broaden the selectivity of preservation places when preserving the water purifier 1 in a refrigerator or the like. In other words, it is possible to enhance the degree of freedom in selecting the preservation places of the water purifier 1.

The gravity center can be lowered by enabling the water purifier 1 to be placed in position with the portion other than the bottom wall 24 facing downwards. This makes it possible to restrain the water purifier 1 from falling down and to stably place the water purifier 1 in position.

If the area of the placement portion is made greater than the area of the bottom wall 24, it becomes possible to more stably place the water purifier 1 in position.

With the present embodiment, the placement surface 22a of the rear side wall portion (placement portion) 22 is formed into a planar shape. This makes it possible to restrain the water purifier 1 from rocking when it is placed in position with the rear side wall portion (placement portion) 22 facing downwards.

With the present embodiment, the water purifier 1 is provided with the lid 80 for covering the water feeding inlet 72a through which to feed the raw water into the raw water compartment S1 and the water pouring outlet 53a through which to pour the purified water toward the outside. This makes it possible to restrain the water contained in the water purifier 1 from leaking to the outside when the water purifier 1 is placed in position with the rear side wall portion (placement portion) 22 facing downwards.

Since the inside and outside of the purifier body 10 is sealed by the lid 80, the maximum volume of the purified water storable with no likelihood of leakage when the water purifier 1 is placed in position with the rear side wall portion (placement portion) 22 facing downwards can be increased without increasing the size of the water purifier 1. In a hypothetical case where the inside and outside of the purifier body 10 is not sealed, the maximum volume of the purified water would be equal to the purified water volume indicated by the water level Aw3 in Fig. 4. However, the sealing of the purifier body 10 makes it possible to increase the maximum volume of the purified water up to the water level Aw2. If the mixing of the raw water and the purified water is not taken into account, it is possible to prevent occurrence of leakage even when the purified water is stored over the water level Aw2.

As mentioned above, the sealing of the inside and outside of the purifier body 10 with the lid 80 makes it possible to increase the maximum volume of the purified water storable with no leakage and to reduce the size of the water purifier 1. Accordingly, it is possible to further broaden the selectivity of preservation places when preserving the water purifier 1 in a refrigerator or the like.

With the present embodiment, when the lid 80 closes the water feeding inlet 72a and the water pouring outlet 53a, the communication between the water pouring outlet 53a and the purified water compartment S2 is interrupted by the sealing portion (first sealing portion) 84 while the gap formed between the internal vessel (inner wall) 70 and the lid 80 is sealed by the O-ring (second sealing portion) 72e. This makes it possible to restrain the raw water and the purified water from being mixed within the purifier body 10 when the water purifier 1 is placed in position with the rear side wall portion (placement portion) 22 facing downwards. If the lid 80 is closed after purification of the raw water, the pressures in the raw water compartment S1 and the purified water compartment S2 are kept substantially equal to each other. This makes it possible to restrain the purified water from flowing back into the raw water compartment S1.

With the present embodiment, the thread coupling of the lid 80 to the purifier body 10 helps prevent the lid 80 from being removed from the purifier body 10. When the lid 80 is rotated in the opening direction, the sealing provided by the sealing portion (first sealing portion) 84 is first released and the sealing offered by the O-ring (second sealing portion) 72e is released subsequently. Accordingly, if the lid 80 is kept in the state (the half-open state in the present embodiment) in which the sealing provided by the sealing portion (first sealing portion) 84 is released but the sealing offered by the O-ring (second sealing portion) 72e is not released, it is possible to pour the purified water from the water pouring outlet 53a while restraining the raw water from being mixed with the purified water. In other words, it becomes possible to discharge the purified water without having to remove the lid 80 from the purifier body 10.

Thanks to the thread coupling of the lid 80 to the purifier body 10, the sealing provided by the sealing portion (first sealing portion) 84 or the O-ring (second sealing portion) 72e can be released by merely rotating the lid 80 in the opening direction. This assists in simplifying the configuration of the water purifier 1.

With the present embodiment, the discharge hole 91e of the purification cartridge (purification unit) 90 is arranged to lie above the water level Aw2 of the purified water compartment S2, when the water purifier 1 is placed in position with the rear side wall portion (placement portion) 22 facing downwards in a state that the purified water compartment S2 stores the same quantity of purified water as the upper limit of the permissible storage volume of the raw water compartment S1 (as the volume of the raw water fed to reach the water level Awl shown in Fig. 3). This makes it possible to restrain the raw water and the purified water from being mixed with each other in the purification cartridge (purification unit) 90 when the water purifier 1 is placed in position with the rear side wall portion (placement portion) 22 facing downwards.

Since the discharge hole 91e is subjected to edge cutting, it is possible to restrain the purified water rotten during long-term preservation from infiltrating into the purification cartridge 90 and to prevent the purified water from being secondarily contaminated by the propagation of bacteria in the purification cartridge 90. If the tail end wall 73a is further off-centered to lie at the upper side in a state that the water purifier 1 is placed in position with the rear side wall portion (placement portion) 22 facing downwards, it is possible to increase the permissible volume of the purified water stored within the purified water compartment S2 (namely, to increase the height of the water level Aw2 shown in Fig. 4).

With the present embodiment, the purifier body 10 includes the external vessel 20 provided with the purified water compartment S2 and the internal vessel 70 provided with the raw water compartment S1 and removably attached to the external vessel 20. This makes it possible to cleanse the purifier body 10 with ease. As a result, it is possible to keep the purifier body 10 clean and to restrain the purifier body 10 from being contaminated by the propagation of bacteria.

With the present embodiment, the relative rotational movement of the internal vessel 70 with respect to the external vessel 20 is restrained by the engagement portions (recess portions 71d) and the protrusion portion 52b engaging with one of the engagement portions. This makes it possible to restrain the internal vessel 70 from rotating together with the lid 80 when the lid 80 is rotated and removed. Accordingly, it is possible to easily perform the opening and closing of the lid 80.

In the present embodiment, the lid 80 is rotated in a state that the inner circumferential surface 87 of the attachment barrel 85 makes sliding contact with the O-ring 27e, which is particularly useful. In addition, since the unitary rotation of the lid 80 and the internal vessel 70 can be restrained when a user tries to open the lid 80, it is possible to prevent the internal vessel 70 from being removed from the external vessel 20 together with the removal of the lid 80 from the purifier body 10. This eliminates the need to reset the internal vessel 70 and restrains the internal vessel 70 from dropping from the lid 80 and undergoing breakage.

With the present embodiment, the purifier body 10 is provided with the air hole (third communication hole) 52c through which the purified water compartment S2 communicates with the outside in a state that the sealing portion (first sealing portion) 84 interrupts the communication with the outside but releases the sealing between the water pouring outlet 53a and the purified water compartment S2. Thanks to this feature, the air can be easily drawn from the outside through the air hole (third communication hole) 52c during the course of pouring the purified water. This makes it possible to maintain a stable water discharge state.

### (Second Embodiment)

Just like the water purifier (water purification device) 1 of the first embodiment, the water purifier (water purification device) 1A of the present embodiment includes a placement portion provided in other area than the bottom wall 24 of the purifier body 10 so that the water purifier 1A can be placed in position with the placement portion facing downwards.

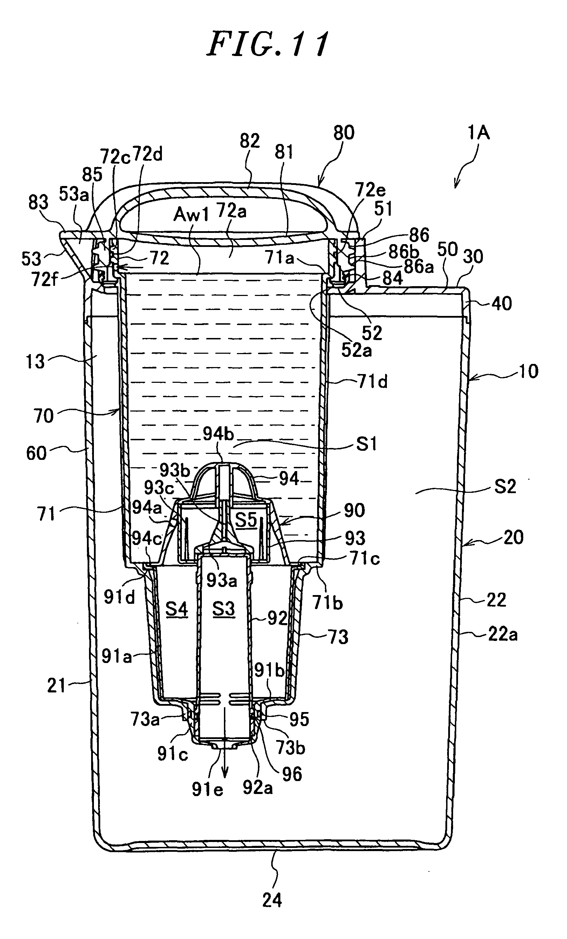

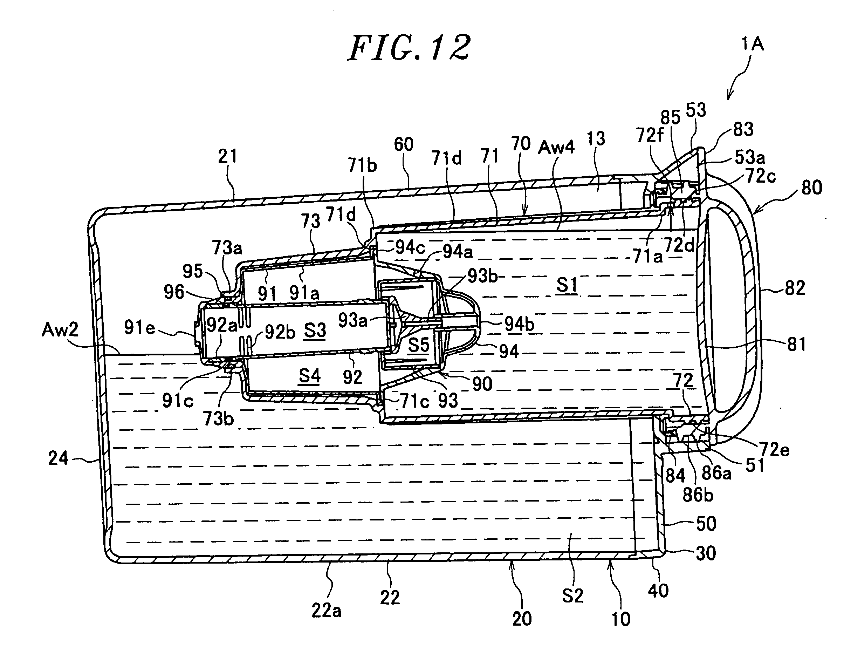

More specifically, as shown in Figs. 11 and 12, a planar placement surface 22a is provided in the rear side wall portion 22 of the purifier body 10 so that the water purifier 1A can be placed in position with the placement surface 22a of the rear side wall portion 22 facing downwards.

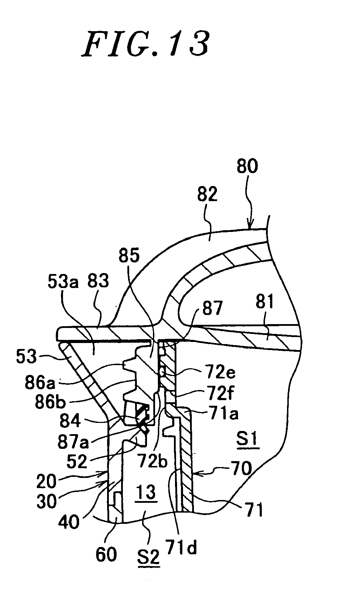

The present embodiment differs largely from the first embodiment in that a communication hole (first communication hole) 72f for bringing the raw water compartment S1 and the purified water compartment S2 into communication with each other is formed in the inner wall (or the internal vessel 70) partitioning the raw water compartment S1 and the purified water compartment S2 of the purifier body 10 (see Fig. 13).

The provision of the communication hole (first communication hole) 72f makes it possible to restrain the pressure within the raw water compartment S1 from becoming lower than the pressure within the purified water compartment S2 and to restrain the flow rate of the purified water from being reduced even when the raw water is purified with the water feeding inlet 72a and the water pouring outlet 53a closed by the lid 80.

In the present embodiment, the communication hole (first communication hole) 72f is provided to lie above the water level Aw4 (see Fig. 12) of the raw water compartment S1 when the water purifier 1A is placed in position with the rear side wall portion 22 facing downwards in a state that the raw water compartment S1 stores the raw water up to the upper limit of the permissible storage volume (namely, the volume of the raw water fed to reach the water level Awl shown in Fig. 11).

The present embodiment set forth above is capable of providing the same advantageous effects as available in the first embodiment.

Additionally, with the present embodiment, the communication hole (first communication hole) 72f for bringing the raw water compartment S1 and the purified water compartment S2 into communication with each other is formed in the internal vessel 70 (or the inner wall) partitioning the raw water compartment S1 and the purified water compartment S2 of the purifier body 10. When the raw water is fed into the raw water compartment S1, the communication hole (first communication hole) 72f serves to keep the pressures within the raw water compartment S1 and the purified water compartment S2 substantially equal. This makes it possible to positively restrain the flow rate of the purified water from being reduced when the water feeding inlet 72a and the water pouring outlet 53a are closed by the lid 80. As a result, it becomes possible to perform water purification in a state the water feeding inlet 72a and the water pouring outlet 53a are closed by the lid 80. This eliminates the need to close the lid 80 later, thereby making it possible to improve the work efficiency. Moreover, it is possible to positively prevent the dirt (floating materials) present in the ambient air from entering the water purifier 1A. This assists in prolonging the lifespan of the purification cartridge (purification unit) 90.

With the present embodiment, the communication hole (first communication hole) 72f is provided to lie above the water level Aw4 of the raw water compartment S1 when the water purifier 1A is placed in position with the rear side wall portion (placement portion) 22 facing downwards in a state that the raw water compartment S1 stores the raw water up to the upper limit of the permissible storage volume (namely, the volume of the raw water fed to reach the water level Awl shown in Fig. 11). This makes it possible to restrain the raw water stored within the raw water compartment S1 from flowing into the purified water compartment S2 through the communication hole (first communication hole) 72f when the water purifier 1A is placed in position after water purification with the rear side wall portion (placement portion) 22 facing downwards.

### (Third Embodiment)

Just like the water purifier (water purification device) 1 of the first embodiment, the water purifier (water purification device) 1B of the present embodiment includes a placement portion provided in other area than the bottom wall 24 of the purifier body 10 so that the water purifier 1B can be placed in position with the placement portion facing downwards.

More specifically, a planar placement surface 22a is provided in the rear side wall portion 22 of the purifier body 10 so that the water purifier 1B can be placed in position with the placement surface 22a of the rear side wall portion 22 facing downwards.

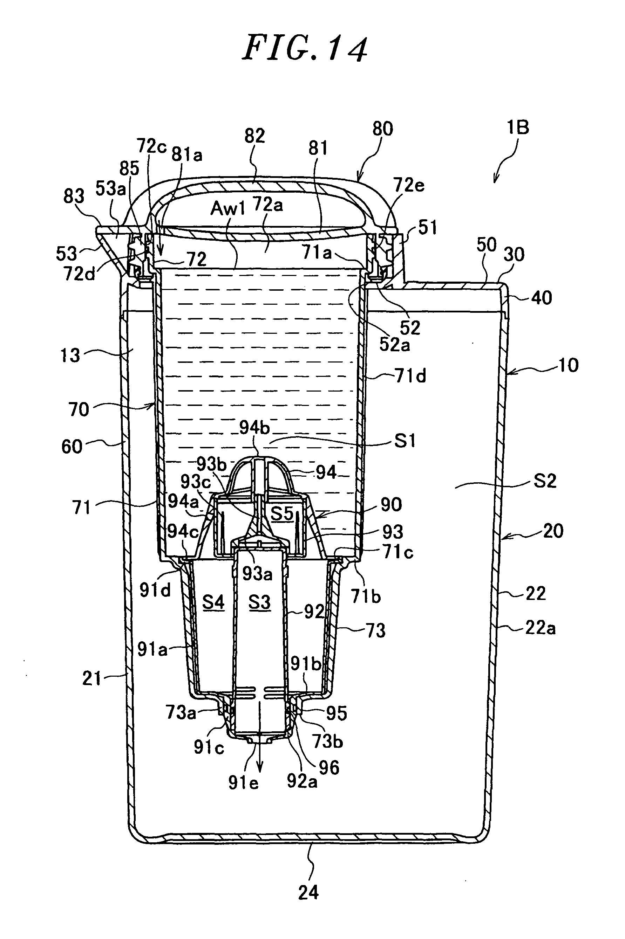

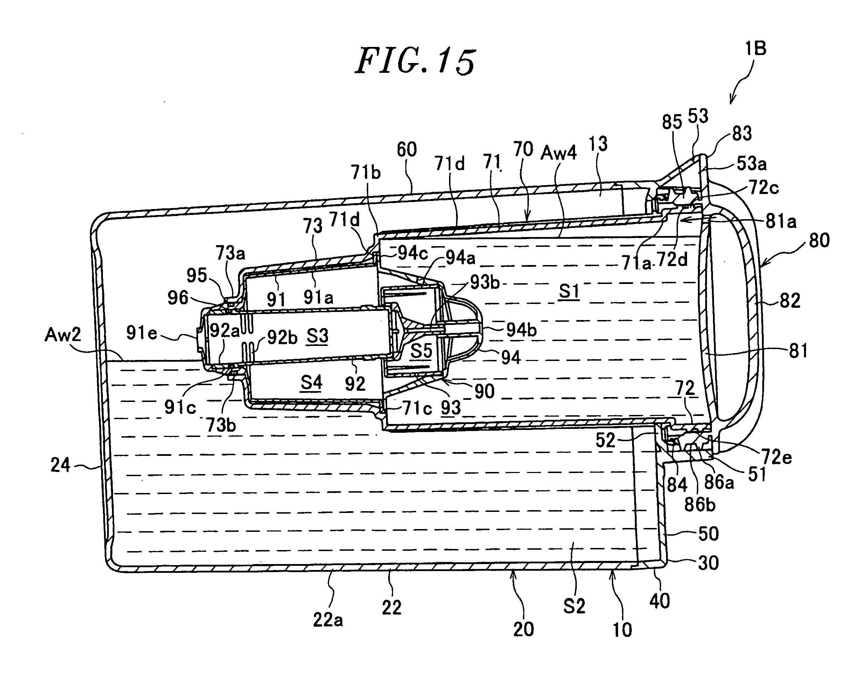

The present embodiment differs largely from the first embodiment in that a communication hole (second communication hole) 81a for bringing the raw water compartment S1 into communication with the outside is formed in the lid 80 (see Figs. 14 and 15).

The provision of the communication hole (second communication hole) 81a makes it possible to restrain the pressure within the raw water compartment S1 from becoming a negative pressure and to restrain the flow rate of the purified water from being reduced even when the raw water is purified with the water feeding inlet 72a and the water pouring outlet 53a closed by the lid 80.

In the present embodiment, the communication hole (second communication hole) 81a is provided to lie above the water level Aw4 of the raw water compartment S1 when the water purifier 1B is placed in position with the rear side wall portion 22 facing downwards in a state that the raw water compartment S1 stores the raw water up to the upper limit of the permissible storage volume (namely, the volume of the raw water fed to reach the water level Awl shown in Fig. 14).

In the present embodiment, the communication hole (second communication hole) 81a is provided below the handle 82 to positively prevent the dirt (floating materials) present in the ambient air from entering the raw water compartment S1 through the communication hole (second communication hole) 81a.

The present embodiment set forth above is capable of providing the same advantageous effects as available in the first embodiment.

Additionally, with the present embodiment, the communication hole (second communication hole) 81a for bringing the raw water compartment S1 into communication with the outside is formed in the lid 80 so that the air can be drawn into the raw water compartment S1 from the outside. This makes it possible to positively restrain the flow rate of the purified water from being reduced when the raw water is fed into the raw water compartment S1. In other words, it is possible to positively restrain the flow rate of the purified water from being reduced when the water feeding inlet 72a and the water pouring outlet 53a are closed by the lid 80. Thus, the water purification can be performed in a state that the water feeding inlet 72a and the water pouring outlet 53a are closed by the lid 80. This eliminates the need to close the lid 80 later, thereby making it possible to improve the work efficiency. Moreover, it is possible to positively prevent the dirt (floating materials) present in the ambient air from entering the water purifier 1B. This assists in prolonging the lifespan of the purification cartridge (purification unit) 90.

With the present embodiment, the communication hole (second communication hole) 81a is provided to lie above the water level Aw4 of the raw water compartment S1 when the water purifier 1B is placed in position with the rear side wall portion (placement portion) 22 facing downwards in a state that the raw water compartment S1 stores the raw water up to the upper limit of the permissible storage volume (namely, the volume of the raw water fed to reach the water level Awl shown in Fig. 14). This makes it possible to restrain the raw water stored within the raw water compartment S1 from leaking to the outside through the communication hole (second communication hole) 81a when the water purifier 1B is placed in position after water purification with the rear side wall portion (placement portion) 22 facing downwards.

### (Fourth Embodiment)

Just like the water purifier (water purification device) 1 of the first embodiment, the water purifier (water purification device) 1C of the present embodiment includes a placement portion provided in other area than the bottom wall 24 of the purifier body 10 so that the water purifier 1C can be placed in position with the placement portion facing downwards.

More specifically, a planar placement surface 22a is provided in the rear side wall portion 22 of the purifier body 10 so that the water purifier 1C can be placed in position with the placement surface 22a of the rear side wall portion 22 facing downwards.

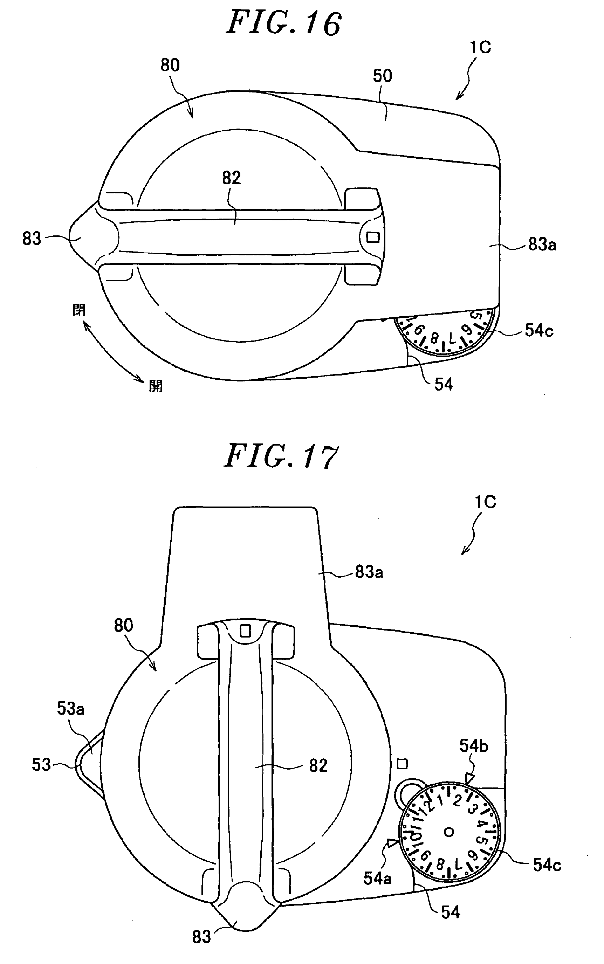

The present embodiment differs largely from the first embodiment in that the lid 80 includes an extension portion 83a lying within the contour of the purifier body 10 in a plan view when the water feeding inlet 72a and the water pouring outlet 53a are closed by the lid 80 but protruding outwards beyond the contour of the purifier body 10 in a plan view when the lid 80 is rotated in an opening direction (e.g., when the lid 80 is in a half-open state) (see Figs. 16 and 17).

The present embodiment set forth above is capable of providing the same advantageous effects as available in the first embodiment.

Additionally, with the present embodiment, the lid 80 is provided with the extension portion 83a lying within the contour of the purifier body 10 in a plan view when the water feeding inlet 72a and the water pouring outlet 53a are closed by the lid 80 but protruding outwards beyond the contour of the purifier body 10 in a plan view when the lid 80 is rotated in the opening direction. This enables a user to clearly figure out the positional relationship available when the water feeding inlet 72a and the water pouring outlet 53a are not closed by the lid 80. Accordingly, the user is prevented from placing the water purifier 1C in position with the rear side wall portion (placement portion) 22 facing downwards in a state that the water feeding inlet 72a and the water pouring outlet 53a are not closed by the lid 80.

In other words, it is possible for a user to easily confirm the fully closed state of the lid 80 by merely observing the lid 80.

As an alternative example, if the lid 80 is configured so that the extension portion 83a can protrude beyond the rear side wall portion (placement portion) 22 when the lid 80 is in the half-open state, it becomes impossible, due to the hindrance of the extension portion 83a, to place the water purifier 1C in position with the rear side wall portion (placement portion) 22 facing downwards when the lid 80 is in the half-open state (namely, when the lid 80 is not in a fully closed state).

While certain preferred embodiments of the present invention have been described hereinabove, the present invention is not limited thereto but may be modified in many different forms.

For example, the rear side wall portion has been illustrated as an example of the placement portion in the foregoing embodiments. However, the present invention is not limited thereto. Alternatively, other portions than the rear side wall portion, e.g., the left and right side wall portions, may be used as the placement portion. Moreover, it may be possible to provide placement portions in a plurality of areas. In this case, it is desirable to ensure that the purified water and the raw water are not mixed with each other by properly setting the position of the communication hole or the air hole and the position of the discharge hole of the purification cartridge (purification unit).

Although the placement portion illustrated in each of the foregoing embodiments has a planar shape and makes contact with the internal floor surface of a refrigerator or the like over the entirety of the planar surface, the present invention is not limited thereto. For example, leg portions may be provided in four corners of one of the side surfaces so that the leg portions can serve as the placement portion. In this case, it may be possible to ensure that only the leg portions of four corners make contact with the internal floor surface of the refrigerator with the side surface area kept out of contact with the internal floor surface. As a consequence, it is possible to restrain the dirt present on the internal floor surface of the refrigerator from adhering to the side surface area, which makes it possible to keep the water purifier clean. In addition, the side surface area can be exposed to the cold air existing within the refrigerator, which makes it possible to increase the purified water cooling efficiency. In case of providing the leg portions in four corners as above, it is desirable that the side wall area has an outwardly-bulging shape. This makes it possible to increase the capacity of the purified water compartment as compared with the case where the side wall area has a planar shape.

Moreover, it may be possible to properly change the specifications (shape, size, layout, etc.) of the purification cartridge (purification unit), the purifier body, the raw water compartment, the purified water compartment and other portions.

While the invention has been shown and described with respect to the embodiments, it will be understood by those skilled in the art that various changes and modification may be made without departing from the scope of the invention as defined in the following claims.

## Claims

1. A water purification device, comprising a purifier body and a purification unit arranged within the purifier body, the purifier body including a raw water compartment for storing raw water and a purified water compartment for storing purified water purified by the purification unit, the water purification device capable of being placed in position with a bottom wall of the purifier body facing downwards, wherein the purifier body further includes a placement portion provided in other area thereof than the bottom wall so that the water purification device can be placed in position with the placement portion facing downwards.

2. The device of claim 1, wherein the placement portion includes a planar placement surface.

3. The device of claim 1 or 2, wherein the purifier body has a water feeding inlet through which to feed the raw water into the raw water compartment and a water pouring outlet through which to pour the purified water toward the outside, and the water purification device further comprises a lid for closing the water feeding inlet and the water pouring outlet.

4. The device of claim 3, wherein the purifier body further includes an inner wall for partitioning the raw water compartment and the purified water compartment, and the water purification device further comprises a first sealing portion provided in the lid for releasably sealing the communication between the water pouring outlet and the purified water compartment and a second sealing portion provided between the inner wall and the lid for releasably sealing a gap between the inner wall and the lid, the communication between the water pouring outlet and the purified water compartment being sealed by the first sealing portion and the gap between the inner wall and the lid being sealed by the second sealing portion when the lid closes the water feeding inlet and the water pouring outlet.

5. The device of claim 4, wherein the lid is threadedly coupled to the purifier body, the sealing provided by the first sealing portion being first released and the sealing offered by the second sealing portion being released subsequently when the lid is rotated in an opening direction.

6. The device of claim 4 or 5, wherein the inner wall of the purifier body has a first communication hole for bringing the raw water compartment and the purified water compartment into communication with each other.

7. The device of claim 6, wherein the first communication hole is provided to lie above the water level of the raw water compartment when the water purification device is placed in position with the placement portion facing downwards in a state that the raw water compartment stores the raw water up to the upper limit of the permissible storage volume of the raw water compartment.

8. The device of any one of claims 3 to 7, wherein the lid has a second communication hole for bringing the raw water compartment into communication with the outside.

9. The device of claim 8, wherein the second communication hole is provided to lie above the water level of the raw water compartment when the water purification device is placed in position with the placement portion facing downwards in a state that the raw water compartment stores the raw water up to the upper limit of the permissible storage volume of the raw water compartment.

10. The device of any one of claims 1 to 9, wherein the purification unit has a discharge hole through which to discharge the purified water into the purified water compartment, the discharge hole being arranged to lie above the water level of the purified water compartment when the water purification device is placed in position with the placement portion facing downwards in a state that the purified water compartment stores the same quantity of purified water as the upper limit of the permissible storage volume of the raw water compartment.

11. The device of any one of claims 1 to 10, wherein the purifier body includes an external vessel for defining the purified water compartment and an internal vessel for defining the raw water compartment, the internal vessel being removably attached to the external vessel.

12. The device of claim 11, wherein the external vessel and the internal vessel are respectively provided with engagement portions engaging with each other to restrain relative rotational movement of the internal vessel with respect to the external vessel.

13. The device of claim 4, wherein the purifier body has a third communication hole through which the purified water compartment communicates with the outside in a state that the first sealing portion interrupts communication with the outside but releases the sealing between the water pouring outlet and the purified water compartment.

14. The device of claim 5, wherein the lid includes an extension portion lying within the contour of the purifier body in a plan view when the water feeding inlet and the water pouring outlet are closed by the lid but protruding outwards beyond the contour of the purifier body in a plan view when the lid is rotated in the opening direction.
